# EUROPÄISCHE PATENTSCHRIFT

(11) **EP 1 228 153 B1**
(45) Veröffentlichungstag und Bekanntmachung des Hinweises auf die Patenterteilung: **29.05.2013**
(21) Anmeldenummer: 00962404.0
(22) Anmeldetag: 29.08.2000
(51) Int. Cl.: C09D 127/12, C09D 171/00, C08K 3/00, B32B 27/28, B32B 27/30, B32B 7/02

(54) **BESCHICHTUNG UND DIESE UMFASSENDE DICHTUNG**
COATING AND A SEAL CONSISTING OF SAID COATING
REVETEMENT ET GARNITURE DONT IL FAIT PARTIE

(30) Priorität: 31.08.1999 DE 19941410
(43) Veröffentlichungstag der Anmeldung: 07.08.2002
(60) Teilanmeldung: 03016107.9
(73) Patentinhaber: Ste Gesellschaft für Dichtungstechnik mbH, 26386 Wilhelmshaven (DE)
(72) Erfinder: STECHER, Friedhelm, 26386 Wilhelmshaven (DE); STECHER, Christoph, 26388 Wilhelmshaven (DE)
(74) Vertreter: Epping - Hermann - Fischer
(86) Internationale Anmeldenummer: PCT/EP2000/008420
(87) Internationale Veröffentlichungsnummer: WO 2001/016240

(56) Entgegenhaltungen:
- EP-A- 0 607 934
- WO-A-98/04853
- DATABASE WPI Section Ch, Week 198902 Derwent Publications Ltd., London, GB; Class A14, AN 1989-011196 XP002157219 & JP 63 286458 A (YO BEA RULON KOGYO), 24. November 1988 (1988-11-24)

## Beschreibung

Die Erfindung betrifft eine Beschichtung, welche sich insbesondere zur Verwendung für Dichtungen und insbesondere bei Zylinderkopfdichtungen eignet. Bei Dichtungen dienen Beschichtungen oft nicht lediglich dafür, die beschichteten Materialien gegen Witterungseinflüsse oder ähnliches zu schützen, sondern auch dazu, die Abdichteigenschaften der Dichtung zu verbessern. Dies setzt vor allem eine hohe Anpassungsfähigkeit der Beschichtung an die abzudichtende Gegenfläche voraus, um so Rauhigkeiten oder Unebenheiten in der Gegenfläche ausgleichen zu können. Hierfür muß die Beschichtung eine hohe Verformbarkeit aufweisen.

Es gibt jedoch auch Fälle, in denen bei einer Beschichtung zusätzlich zu der guten Anpassungsfähigkeit an die Gegenfläche gute Dauergleiteigenschaften erwünscht sind. Gute Dauergleitung setzt jedoch geringe Fließeigenschaften der Beschichtung und eine geringe Verformbarkeit voraus, also Eigenschaften, die einer guten Anpassungsfähigkeit der Beschichtung an die Gegenfläche zuwider laufen.

Ein Beispiel einer Dichtung, welche sowohl eine gute Dauergleitung als auch eine hohe Anpassungsfähigkeit an die abzudichtenden Gegenflächen aufweisen sollte, ist eine Zylinderkopfdichtung. Bislang werden Zylinderkopfdichtungen üblicherweise mit einer dünnen Beschichtung von etwa einigen Mikrometern Dicke versehen, welche die Anpassungsfähigkeit der Dichtung an Unebenheiten und Rauhigkeiten der abzudichtenden Gegenflächen (Motorblock und Zylinderkopf) verbessern sollen. Solche üblichen Beschichtungen bestehen beispielsweise aus Kautschuk, weichen Metallen oder Molybdändisulfid. Diese Beschichtungen verbessern zwar die Anpassungsfähigkeit der Zylinderkopfdichtung an die Gegenflächen, sind jedoch hinsichtlich der Dauergleitung nicht zufrieden stellend. Die herkömmlichen Beschichtungen fließen vielmehr in den Bereichen, in welchen sie einer besonders hohen Flächenpressung ausgesetzt sind, seitlich weg, so dass in diesen Bereichen die Zylinderkopfdichtung nach einer gewissen Einlaufzeit unmittelbar mit der abzudichtenden Gegenfläche in Berührung kommt.

Aus der US 5846645 ist ein Verfahren zur Herstellung einer fluorierten Beschichtung durch sequentielle Abscheidung zumindest dreier unterschiedlicher Schichten bekannt, wobei jede der Schichten ein Fluor umfassendes Polymer enthält.

Es bestand ein Bedarf an einer Beschichtung, welche eine gute Anpassungsfähigkeit an die abzudichtende Gegenfläche einerseits und gute Dauergleiteigenschaften andererseits miteinander verbindet und welche diese Eigenschaften selbst bei hoher Flächenpressung und hoher Temperatur beibehält.

Aufgabe der Erfindung ist es, eine derartige Beschichtung anzugeben. Diese Beschichtung sollte sich insbesondere zur Verwendung in einer Zylinderkopfdichtung eignen.

Die Lösung dieser Aufgabe gelingt mit der Beschichtung gemäß Anspruch 1. Bevorzugte Ausführungsformen sind den Unteransprüchen zu entnehmen. Die Erfindung betrifft weiterhin ein Verfahren zum Herstellen dieser Beschichtung gemäß Anspruch 12 sowie eine Dichtung gemäß Anspruch 16.

Die Kombination der Eigenschaften Dauergleitung bei gleichzeitiger hoher Anpassungsfähigkeit wird in der Beschichtung gemäß Anspruch 1 erfindungsgemäß dadurch erreicht, daß sie wenigstens einen thermoplastischen Fluorkunststoff umfaßt. Dieser Fluorkunststoff sorgt für die hohe Anpassungsfähigkeit an die abzudichtende Gegenfläche, da er relativ weich ist. Der weichste Bereich der erfindungsgemäßen Beschichtung befindet sich an derjenigen Oberfläche, welche von dem Substrat, auf welches die Beschichtung aufgebracht werden soll, entfernt gelegen ist. In Richtung auf das zu beschichtende Substrat hin nimmt Bereich einer ihrer Oberflächen besonders weich ist, wahrend ihre Härte in Richtung auf die andere Oberfläche hin zunimmt. Diese weiche Oberfläche ermöglicht eine ausgezeichnete Anpassung an eine abzudichtende Gegenfläche. Durch die Verwendung eines thermoplastischen Fluorkunststoffs weist diese Oberfläche zudem eine äußerst niedrige Reibung und hohe Chemikalienbeständigkeit auf. Auch die Temperaturbeständigkeit ist ausgezeichnet. Im Unterschied zu herkömmlichen Beschichtungen fließt die erfindungsgemäße Beschichtung jedoch selbst bei hoher Flächenpressung und hoher Temperatur nicht vollständig weg, da ihre Härte in Richtung auf die erste Oberfläche, welche dem zu beschichtenden Substrat benachbart ist, hin zunimmt. Damit werden Verformbarkeit und Fließeigenschaften geringer. Zweckmäßig erfolgt diese Zunahme der Härte kontinuierlich. Die Härte eines Kunststoffs läßt sich beispielsweise anhand der Kugeldruckhärte (DIN 53456) oder der Druckfestigkeit gemäß ASTM D695 bestimmen.

Das Härtegefälle in der Beschichtung kann zum einen dadurch erreicht werden, daß dem wenigstens einen thermoplastischen Fluorkunststoff wenigstens ein Füll- oder Verstärkungsstoff zugesetzt ist, dessen Konzentration in Richtung auf die erste (Substrat)Oberfläche hin zunimmt. Die Menge der Füll- oder Verstärkungsstoffe richtet sich dabei in erster Linie nach den Anforderungen, welche an die erfindungsgemäße Beschichtung gestellt werden. Übliche Füllstoffmengen für die weiche Seite der Beschichtung liegen in der Regel zwischen 0 und 10 Vol.-%, insbesondere 0 bis 5 Vol-%. Auf der harten (Substrat) Seite werden die Füll- oder Verstärkungsstoffe üblicherweise in einem Anteil von 20 bis 40, insbesondere 30 bis 40 Vol.-%, eingesetzt.

Es können grundsätzlich alle herkömmlicherweise für Fluorkunststoffe verwendeten Füll- oder Verstärkungsstoffe eingesetzt werden. Bevorzugt sind Graphit, Kohle, Kohlenstoffasern, Glasfasern, Whisker oder Molybdändisulfid. Werden Fasern oder Whisker verwendet, werden sie vorzugsweise so eingesetzt, daß sie im wesentlichen parallel zu erster und zweiter Oberfläche der Beschichtung ausgerichtet sind. Dies kann auf herkömmliche Weise, beispielsweise unter Einsatz von Magnetfeldern, erreicht werden.

Die Beschichtung umfaßt neben dem Fluorkunststoff wenigstens ein thermoplastisches Polykondensat, welches eine größere Härte als der Fluorkunststoff aufweist. Die Konzentration des thermoplastischen Polykondensats nimmt in Richtung auf die erste (Substrat) Oberfläche der Beschichtung hin zu. Auch hier erfolgt die Konzentrationszunahme und damit die Härtezunahme bevorzugt im wesentlichen kontinuierlich.

Zweckmäßig beträgt der Anteil an Fluorkunststoff im Bereich der ersten Oberfläche 0 Gew.-%, da auf diese Weise die Haftung zum Substrat verbessert werden kann. Im Bereich der zweiten Oberfläche, welche vom Substrat abgewandt ist, sind vorzugsweise 80 bis 100 Gew.-% Fluorkunststoff und insbesondere 95 bis 100 Gew.-% vorhanden.

Auch dem thermoplastischen Polykondensat kann wenigstens ein Füll- oder Verstärkungsstoff zugesetzt sein. Zweckmäßig dient dieser Füll- oder Verstärkungsstoff dazu, die Härte im Polykondensat entsprechend den erfindungsgemäßen Anforderungen einzustellen. Grundsätzlich können alle herkömmlichen Füll - oder Verstärkungsstoffe verwendet werden. Bevorzugt sind insbesondere Graphit, Kohle, Kohlenstoffasern oder Glasfasern.

Als thermoplastisches Polykondensat ist besonders ein solches bevorzugt, welches eine obere Dauergebrauchstemperatur von mindestens 150 °C aufweist. Soll die erfindungsgemäße Beschichtung beispielsweise für eine Zylinderkopfdichtung oder ähnliche Substrate angewendet werden, bei welchen mit einer hohen Temperaturbelastung zu rechnen ist, werden vorzugsweise solche thermoplastischen Polykondensate eingesetzt, welche eine obere Dauergebrauchstemperatur von mindestens 180 °C und insbesondere von mindestens 200 °C aufweisen.

Aus den gleichen Gründen ist es zweckmäßig, wenn das thermoplastische Polykondensat eine Formbeständigkeit in der Wärme (gemessen nach ASTM D648 bei 1,8 N/mm²) von mindestens 140 °C, insbesondere von mindestens 180 °C und bevorzugt von mindestens 190 °C aufweist.

Für die Verwendung in Zylinderkopfdichtungen oder ähnliche Verwendungen ist außerdem eine hohe Hydrolysebeständigkeit, selbst bei hohen Temperaturen, und eine gute Öl- und Fettbeständigkeit erforderlich. Zweckmäßig wird deshalb als thermoplastisches Polykondensat in der erfindungsgemäßen Beschichtung ein solches verwendet, welches hydrolysebeständig und insbesondere bis mindestens 130 °C gegen heißen Wasserdampf beständig ist. Die Öl- und Fettbeständigkeit des thermoplastischen Polykondensats sollte bevorzugt bis zu einer Temperatur von mindestens 150 °C gegeben sein.

Ebenfalls vorteilhaft ist es, wenn das verwendete thermoplastische Polykondensat gute Gleitreibungseigenschaften besitzt. Vorzugsweise besitzt es eine Gleitreibungszahl µ bei 40 °C von ≤ 0,7 und insbesondere ≤ 0,55.

Thermoplastische Polykondensate, welche sich für die erfindungsgemäße Beschichtung besonders gut eignen, sind ein Polysulfon (PSU), Polyphenylensulfid (PPS), Polyphenylethersulfon (PPSU), Polyethersulfon (PES), Polyaryletherketon (PAEK), Polyetherketon (PEK) oder Polyetheretherketon (PEEK). Die vorstehend aufgelisteten Eigenschaften können gegebenenfalls durch entsprechenden Zusatz von Füll- oder Verstärkungsstoffen oder durch Mischen verschiedener thermoplastischer Polykondensate erreicht werden.

Andere thermoplastische Polykondensate wie Polyamide, Polyimide oder Polyester sind zur Verwendung in der erfindungsgemäßen Beschichtung nicht geeignet, da sie vor allem bei höherer Temperatur zu Hydrolyse neigen. Aufgrund ihrer herausragenden mechanischen und thermischen Eigenschaften sowie ihrer exzellenten Öl-, Fett- und Hydrolysebeständigkeit selbst bei hohen Temperaturen gehören PPS, PEK und PEEK, gefüllt oder ungefüllt, sowie deren Mischungen zu den erfindungsgemäß bevorzugten thermoplastischen Polykondensaten.

Der Fluorkunststoff der erfindungsgemäßen Beschichtung wird zweckmäßig ausgewählt aus Polytetrafluorethylen (PTFE), Tetrafluorethylen/Hexafluorpropylen-Copolymer (FEP) oder Perfluoralkoxy-Copolymer (PFA), welche gefüllt oder ungefüllt verwendet werden können. Auch Mischungen dieser Fluorpolymere können eingesetzt werden.

Die Haftung der erfindungsgemäßen Beschichtung an dem Substrat, welches beschichtet werden soll, ist üblicherweise ausreichend, insbesondere dann, wenn im Bereich der dem Substrat zugewandten Oberfläche der Beschichtung kein Fluorkunststoff vorhanden ist. Es ist jedoch ebenfalls möglich, im Bereich der Substratoberfläche wenigstens einen Haftvermittler und/oder wenigstens ein Klebemittel zuzufügen. Die Wahl dieser Substanzen ist nicht besonders beschränkt. Es muß lediglich darauf geachtet werden, daß sie sowohl mit der Beschichtung als auch mit dem Substrat kompatibel sind.

Die erfindungsgemäße Beschichtung wird zweckmäßig nach dem in Anspruch 12 beschriebenen Verfahren hergestellt. Dazu werden auf eine Unterlage nacheinander Schichten aus Kunststoff mit abnehmender Härte aufgebracht, und die einzelnen Schichten werden unter Erwärmen gesintert oder geschmolzen und so miteinander verbunden. Für den Fall einer Beschichtung gemäß Anspruch 3, bei welchem die Härte über die Konzentration der Füll- oder Verstärkungsstoffe variiert wird, werden beispielsweise verschiedene Fluorkunststoffe mit unterschiedlichem Anteil an Füll- oder Verstärkungsstoff bereitgestellt. Auf die Unterlage wird zunächst der Kunststoff mit dem größten Anteil an Füllstoff aufgebracht und gesintert. Anschließend wird eine Schicht aus dem Fluorkunststoff mit dem nächst geringeren Füllstoffanteil aufgetragen und erneut gesintert. Der Vorgang wird bis zu dem Fluorkunststoff mit dem geringsten oder gar keinem Füllstoffanteil hin fortgesetzt. Der Sintervorgang führt nicht nur zu einer Verbindung der einzelnen Schichten, sondern auch zu einer Vergleichmäßigung des Füllstoffgefälles innerhalb der Beschichtung.

Analog wird bei einer Beschichtung gemäß Anspruch 1 vorgegangen. Es werden also Chargen eines thermoplastischen Polykondensats bereitgestellt, die unterschiedliche Anteile an Fluorkunststoff aufweisen. Es wird zunächst die Charge aufgebracht und erwärmt, welche den geringsten Anteil an Fluorkunststoff enthält. Die oberste Schicht ist diejenige mit dem höchsten Anteil an Fluorkunststoff. Die Härte der einzelnen Schichten kann zudem durch weitere Zuschläge wie unterschiedliche Anteile an Füll- oder Verstärkungsstoffen, Beimischung eines weiteren thermoplastischen Polykondensats usw. variiert werden.

Die Erwärmungstemperatur richtet sich nach den verwendeten Komponenten der Beschichtung. Für die als bevorzugt angegebenen Komponenten hat sich ein Temperaturbereich von 350 bis 400 °C als geeignet erwiesen.

Das schichtweise Aufbringen und Erwärmen kann direkt auf das zu beschichtende Substrat als Unterlage erfolgen. Alternativ ist es jedoch möglich, die erfindungsgemäße Beschichtung unabhängig von dem zu beschichtenden Substrat herzustellen. Es wird also eine geeignete Unterlage verwendet, welche nicht das zu beschichtende Substrat ist. Die fertige Beschichtung wird von der Unterlage abgenommen und kann gegebenenfalls mit einer Klebeschicht versehen werden, um das spätere Aufbringen auf das zu beschichtende Substrat zu erleichtern. Im Fall, daß die Unterlage, auf welcher die erfindungsgemäße Beschichtung erzeugt wird, nicht das zu beschichtende Substrat ist, ist es grundsätzlich möglich, die Beschichtung von der weichen zur harten Seite hin aufzubauen. Zweckmäßiger ist es jedoch, mit dem Aufbringen der härtesten Schicht auf der Unterlage zu beginnen.

Die erfindungsgemäße Beschichtung wird zweckmäßig für eine Dichtung und insbesondere eine Zylinderkopfdichtung verwendet. Letztere sind ebenfalls Gegenstand dieser Erfindung. In einem Aspekt ersetzen dabei die erfindungsgemäßen Beschichtungen diejenigen Beschichtungen, die bisher in bekannten Dichtungen oder Zylinderkopfdichtungen verwendet wurden.

In einem weiteren Aspekt besteht die Dichtung selbst und insbesondere die Zylinderkopfdichtung ganz aus der erfindungsgemäßen Beschichtung. In diesem Fall ist also kein Substrat vorhanden, auf welches die erfindungsgemäße Beschichtung aufgebracht wird. Vielmehr wird die erfindungsgemäße Beschichtung bei ihrer Herstellung in der für die Dichtung erforderlichen Form und mit der erforderlichen Dickenverteilung erzeugt. Dies ist beispielsweise dadurch möglich, daß die Beschichtung in eine entsprechend ausgebildete Sinterform eingebracht und, falls erforderlich, die Schichtdicke über die Dichtungsfläche variiert wird.

Die Erfindung soll nachfolgend anhand eines Beispiels näher erläutert werden. Die Mengenverhältnisse sind dabei in Gewichtsprozent angegeben.

### Beispiel 1

### Herstellung einer Beschichtung für eine Zylinderkopfdichtung

Eine gemäß EP-A-0 835 399 hergestellte einstückige Metalldichtung wird beidseitig mit einer erfindungsgemäßen Beschichtung versehen. Dabei wird wie folgt vorgegangen:

Kunststoffmischungen der folgenden Zusammensetzung wurden bereitgestellt:

| | | |
|---|---|---|
| Mischung a) | 95 % | PEEK |
| | 5 % | Graphit |
| | | |
| Mischung b) | 80 % | PEEK |
| | 10 % | PTFE |
| | 3 % | PFA |
| | 7 % | Graphit |
| | | |
| Mischung c) | 70 % | PEEK |
| | 15 % | PTFE |
| | 8 % | PFA |
| | 7 % | Graphit |
| | | |
| Mischung d) | 60 % | PEEK |
| | 20 % | PTFE |
| | 13 % | PFA |
| | 7 % | Graphit |
| | | |
| Mischung e) | 50 % | PEEK |
| | 25 % | PTFE |
| | 18 % | PFA |
| | 7 % | Graphit |
| | | |
| Mischung f) | 40 % | PEEK |
| | 30 % | PTFE |
| | 23 % | PFA |
| | 7 % | Graphit |
| | | |
| Mischung g) | 30 % | PEEK |
| | 35 % | PTFE |
| | 28 % | PFA |
| | 7 % | Graphit |
| | | |
| Mischung h) | 20 % | PEEK |
| | 40 % | PTFE |
| | 30 % | PFA |
| | 10 % | Graphit |
| | | |
| Mischung i) | 10 % | PEEK |
| | 50 % | PTFE |
| | 30 % | PFA |
| | 10 % | Graphit |
| | | |
| Mischung j) | 60 % | PTFE |
| | 30 % | PFA |
| | 10 % | Graphit |

Zunächst wurde Mischung a) in Form einer wässrigen Dispersion auf die gründlich entfetteten zu beschichtenden Oberflächen der Zylinderkopfdichtung aufgetragen. Die Schicht wurde zunächst in einem Ofen bei 100 °C getrocknet und anschließend bei 380 °C gesintert. Nach dem Abkühlen wurde Mischung b), ebenfalls als wässrige Dispersion, auf die erste Schicht aufgetragen und wie diese getrocknet und gesintert. Auf gleiche Weise wurden nacheinander die Mischungen c) bis j) aufgebracht.

Die Gesamtschichtdicke betrug 60 µm. Bei einem Dauertest in einem Motor zeigte die mit der erfindungsgemäßen Beschichtung versehene Zylinderkopfdichtung eine ausgezeichnete Dichtigkeit. Die erfindungsgemäße Beschichtung sorgte für eine ausgezeichnete Anpassung an die abzudichtenden Gegenflächen bei gleichzeitig hoher Standfestigkeit und ausgezeichneten Dauergleiteigenschaften.

## Patentansprüche

1. Beschichtung zum Aufbringen auf ein Substrat,
**dadurch gekennzeichnet,**
**dass** die Beschichtung wenigstens einen thermoplastischen Fluorkunststoff und ein thermoplastisches Polykondensat umfasst,
**dass** ihre Härte von der zum Aufbringen auf das Substrat bestimmten ersten Oberfläche in Richtung auf die vom Substrat abgelegene zweite Oberfläche hin abnimmt,
**dass** das thermoplastisches Polykondensat eine größere Härte als der wenigstens eine thermoplastische Fluorkunststoff aufweist,
**dass** die Konzentration des thermoplastischen Polykondensats in Richtung auf die erste Oberfläche der Beschichtung hin zunimmt,
**dass** der Anteil an Fluorkunststoff im Bereich der ersten Oberfläche 0 Gew.-% beträgt
**dass** die Beschichtung frei ist von Polyamiden und Polyimiden dass das temperaturbeständige Polykondensat ausgewählt ist aus einem Polysulfon (PSU), Polyphenylensulfid (PPS), Polyphenylethersulfon (PPSU), Polyethersulfon (PES), Polyaryletherketon (PAEK), Polyetherketon (PEK), oder Polyetheretherketon (PEEK) und insbesondere aus gefülltem oder ungefülltem PPS, PEK und PEEK oder deren Mischungen.

2. Beschichtung gemäß Anspruch 1, **dadurch gekennzeichnet, dass** die Härte von erster zu zweiter Oberfläche hin kontinuierlich abnimmt.

3. Beschichtung gemäß Anspruch 1 oder 2, **dadurch gekennzeichnet, dass** dem wenigstens einen thermoplastischen Fluorkunststoff wenigstens ein Füll- oder Verstärkungsstoff zugesetzt ist, dessen Konzentration in Richtung auf die erste Oberfläche hin zunimmt.

4. Beschichtung gemäß Anspruch 3, **dadurch gekennzeichnet, dass** der wenigstens eine Füll- oder Verstärkungsstoff ausgewählt ist aus Graphit, Kohle, Kohlenstofffasern, Glasfasern, Whiskern oder Molybdändisulfid.

5. Beschichtung gemäß Anspruch 4, **dadurch gekennzeichnet, dass** der wenigstens eine Füll- oder Verstärkungsstoff ausgewählt ist aus Fasern oder Whiskern, welche im wesentlichen parallel zu erster und zweiter Oberfläche ausgerichtet sind.

6. Beschichtung gemäß Anspruch 1, **dadurch gekennzeichnet, dass** der Anteil an Fluor- kunststoff im Bereich der zweiten Oberfläche 80 bis 100 Gew.-% oder 95 bis 100 Gew.-% beträgt.

7. Beschichtung nach einem der Ansprüche 1 bis 6, **dadurch gekennzeichnet, dass** der wenigstens eine Füll- oder Verstärkungsstoff ausgewählt ist aus Graphit, Kohle, Kohlenstofftasern oder Glasfasern.

8. Beschichtung gemäß einem der Ansprüche 1 bis 7, **dadurch gekennzeichnet, dass** das thermoplastische Polykondensat eine obere Dauergebrauchstemperatur von mindestens 150 °C, 180 °C oder von mindestens 200 °C aufweist.

9. Beschichtung gemäß einem der Ansprüche 1 bis 8, **dadurch gekennzeichnet, dass** das thermoplastische Polykondensat eine Gleitreibungszahl µ bei 40°C von ≤ 0,7 oder ≤ 0,55 aufweist.

10. Beschichtung gemäß einem der Ansprüche 1 bis 9, **dadurch gekennzeichnet, dass** der Fluorkunststoff ausgewählt ist aus gefülltem oder ungefülltem Polytetrafluorethylen (PTFE), Tetrafluorethylen/Hexafluorpropylen-Copolymer (FEP), Perfluoralkoxy-Copolymer (PFA) oder deren Mischungen.

11. Beschichtung gemäß einem der Ansprüche 1 bis 10, **dadurch gekennzeichnet, dass** im Bereich der ersten Oberfläche wenigstens ein Haftvermittler und/oder wenigstens ein Klebemittel vorhanden ist.

12. Verfahren zum Herstellen einer Beschichtung gemäß einem der Ansprüche 1 bis 11, **dadurch gekennzeichnet, dass** auf eine Unterlage nacheinander Schichten aus Kunststoff mit zunehmendem Anteil an thermoplastischem FluorKunststoff aufgebracht und unter Erwärmung gesintert oder angeschmolzen werden.

13. Verfahren gemäß Anspruch 12, **dadurch gekennzeichnet,**
**dass** auf 350 bis 400 °C erwärmt wird.

14. Verfahren gemäß Anspruch 12 oder 13, **dadurch gekennzeichnet,**
**dass** die Unterlage das zu beschichtende Substrat ist.

15. Verfahren gemäß Anspruch 12 oder 13, **dadurch gekennzeichnet, dass** die Beschichtung von der Unterlage abgenommen und gegebenenfalls mit einer Klebeschicht versehen wird.

16. Dichtung, insbesondere zylinderkopfdichtung, **dadurch gekennzeichnet, dass** sie eine Beschichtung gemäß einem der Ansprüche 1 bis 11 umfassst.

## Claims

1. Coating for application to a substrate, **characterized in that**
the coating comprises at least one thermoplastic fluoropolymer and a thermoplastic polycondensate,
its hardness decreases from the first surface for application to the substrate in the direction of the substrate-remote second surface,
the thermoplastic polycondensate has greater hardness than the at least one thermoplastic fluoropolymer,
the concentration of the thermoplastic polycondensate increases in the direction of the first surface of the coating,
the proportion of fluoropolymer in the region of the first surface is 0 wt%,
the coating is free of polyamides and polyimides,
the thermally stable polycondensate is selected from the group consisting of polysulphone (PSU), polyphenylene sulphide (PPS), polyphenylethersulphone (PPSU), polyethersulphone (PES), polaryletherketone (PAEK), polyetherketone (PEK) and polyetheretherketone (PEEK), and especially from filled or unfilled PPS, PEK and PEEK or mixtures thereof.

2. Coating according to Claim 1, **characterized in that** the hardness decreases continuously from the first surface to the second surface.

3. Coating according to Claim 1 or 2, **characterized in that** the at least one thermoplastic fluoropolymer incorporates at least one filling or reinforcing agent, the concentration of which increases in the direction of the first surface.

4. Coating according to Claim 3, **characterized in that** the at least one filling or reinforcing agent is selected from the group consisting of graphite, carbon, carbon fibres, glass fibres, whiskers and molybdenum disulphide.

5. Coating according to Claim 4, **characterized in that** the at least one filling or reinforcing agent is selected from fibres or whiskers aligned essentially parallel to the first and second surfaces.

6. Coating according to Claim 1, **characterized in that** the proportion of fluoropolymer in the region of the second surface is 80 to 100 wt% or 95 to 100 wt%.

7. Coating according to any of Claims 1 to 6, **characterized in that** the at least one filling or reinforcing agent is selected from the group consisting of graphite, carbon, carbon fibres and glass fibres.

8. Coating according to any of Claims 1 to 7, **characterized in that** the thermoplastic polycondensate has an upper sustained-use temperature of at least 150°C, 180°C or at least 200°C.

9. Coating according to any of Claims 1 to 8, **characterized in that** the thermoplastic polycondensate has a coefficient of sliding friction µ of ≤ 0.7 or ≤ 0.55 at 40°C.

10. Coating according to any of Claims 1 to 9, **characterized in that** the fluoropolymer is selected from the group consisting of filled or unfilled polytetrafluoroethylene (PTFE), tetrafluoroethylene-hexafluoropropylene copolymer (FEP), perfluoroalkoxy copolymer (PFA) and mixtures thereof.

11. Coating according to any of Claims 1 to 10, **characterized in that** at least one adhesion promoter and/or at least one adhesive is present in the region of the first surface.

12. Process for producing a coating according to any of Claims 1 to 11, **characterized in that** layers of polymer with an increasing proportion of thermoplastic fluoropolymer are applied to a support in succession and sintered or partially melted by heating.

13. Process according to Claim 12, **characterized in that** heating is done up to a temperature of 350 to 400°C.

14. Process according to Claim 12 or 13, **characterized in that** the support is the substrate to be coated.

15. Process according to Claim 12 or 13, **characterized in that** the coating is removed from the support and optionally provided with an adhesive layer.

16. Gasket, especially cylinder head gasket, **characterized in that** it comprises a coating according to any of Claims 1 to 11.

## Revendications

1. Revêtement destiné à être appliqué sur un substrat, **caractérisé en ce que** le revêtement comprend au moins un plastique fluoré thermoplastique et un polycondensat thermoplastique,
**en ce que** sa dureté diminue à partir de la première surface destinée à être appliquée sur le substrat dans la direction de la seconde surface éloignée du substrat,
**en ce que** le polycondensat thermoplastique présente une plus grande dureté que le ou les plastiques fluorés thermoplastiques,
**en ce que** la concentration du polycondensat thermoplastique augmente dans la direction de la première surface du revêtement,
**en ce que** la proportion de plastique fluoré est de 0 % en poids dans la zone de la première surface,
**en ce que** le revêtement est exempt de polyamides et de polyimides,
**en ce que** le polycondensat résistant à la température est choisi parmi une polysulfone (PSU), un sulfure de polyphénylène (PPS), une polyphényléthersulfone (PPSU), une polyéthersulfone (PES), une polyaryléthercétone (PAEK), une polyéthercétone (PEK) ou une polyétheréthercétone (PEEK), et notamment parmi un PPS, une PEK et une PEEK chargés ou non chargés, et leurs mélanges.

2. Revêtement selon la revendication 1, **caractérisé en ce que** la dureté diminue en continu de la première vers la seconde surface.

3. Revêtement selon la revendication 1 ou 2, **caractérisé en ce qu'**au moins une charge ou matière renforçante, dont la concentration augmente dans la direction de la première surface, est ajouté au ou aux plastiques fluorés thermoplastiques.

4. Revêtement selon la revendication 3, **caractérisé en ce que** la ou les charges ou matières renforçantes sont choisies parmi le graphite, le charbon, les fibres de carbone, les fibres de verre, les trichites ou le disulfure de molybdène.

5. Revêtement selon la revendication 4, **caractérisé en ce que** la ou les charges ou matières renforçantes sont choisies parmi les fibres ou les trichites, qui sont orientées essentiellement parallèlement à la première et à la seconde surface.

6. Revêtement selon la revendication 1, **caractérisé en ce que** la proportion de plastique fluoré dans la zone de la seconde surface est de 80 à 100 % en poids ou de 95 à 100 % en poids.

7. Revêtement selon l'une quelconque des revendications 1 à 6, **caractérisé en ce que** la ou les charges ou matières renforçantes sont choisies parmi le graphite, le charbon, les fibres de carbone ou les fibres de verre.

8. Revêtement selon l'une quelconque des revendications 1 à 7, **caractérisé en ce que** le polycondensat thermoplastique présente une température d'utilisation durable supérieure d'au moins 150 °C, 180 °C ou d'au moins 200 °C.

9. Revêtement selon l'une quelconque des revendications 1 à 8, **caractérisé en ce que** le polycondensat thermoplastique présente un coefficient de frottement par glissement µ à 40 °C ≤ 0,7 ou ≤ 0,55.

10. Revêtement selon l'une quelconque des revendications 1 à 9, **caractérisé en ce que** le plastique fluoré est choisi parmi le polytétrafluoroéthylène (PTFE) chargé ou non chargé, le copolymère tétrafluoroéthylène/hexafluoropropylène (FEP), le copolymère de perfluoroalcoxy (PFA) ou leurs mélanges.

11. Revêtement selon l'une quelconque des revendications 1 à 10, **caractérisé en ce qu'**au moins un promoteur d'adhésion et/ou au moins un agent adhésif est présent dans la zone de la première surface.

12. Procédé de fabrication d'un revêtement selon l'une quelconque des revendications 1 à 11, **caractérisé en ce que** des couches de plastique ayant une proportion croissante en un plastique fluoré thermoplastique sont appliquées successivement sur un substrat et frittées ou fondues par chauffage.

13. Procédé selon la revendication 12, **caractérisé en ce que** le chauffage est réalisé à une température de 350 à 400 °C.

14. Procédé selon la revendication 12 ou 13, **caractérisé en ce que** le substrat est le substrat à revêtir.

15. Procédé selon la revendication 12 ou 13, **caractérisé en ce que** le revêtement est détaché du substrat et éventuellement muni d'une couche adhésive.

16. Joint, notamment joint de culasse, **caractérisé en ce qu'**il comprend un revêtement selon l'une quelconque des revendications 1 à 11.
